# EUROPEAN PATENT APPLICATION

(11) **EP 4 729 437 A1**
(43) Date of publication of application: **22.04.2026**
(21) Application number: 25209183.0
(22) Date of filing: 16.10.2025
(51) Int. Cl.: B65D 43/02, B29C 45/14

(54) **SEALABLE AND RE-CLOSABLE CUP LID**

(30) Priority: 18.10.2024 SE 2430527
(71) Applicant: Kamelia Konsult & Rekrytering AB, 181 30 Lidingö (SE)
(72) Inventor: Torkel, Bergengren, 181 30 Lidingö (SE)
(74) Representative: Industripatent i Växjö AB

(57) **Abstract**

A sealable and re-closable cup lid replaces the two packaging components (a) foil lid and (b) snap-on lid with one new cup lid combining the sealability of a foil lid and the re-close-ability of a snap-on lid. The cup lid (1) comprises a lid rim (3) and a lid foil (2), wherein the lid foil (2) has an inner surface provided with a sealing area, in particular a heat-sealable area, for attachment to the cup for food products. The lid rim (3) is provided with lugs (33) around its inner perimeter, which lugs (33) ensure that the cup lid (1) can be used to seal tightly around an opening of a cup. The cup lid can be used with any cup and is produced using an injection-moulding process.

## Description

The present invention refers to a sealable and re-closable cup lid combining the sealability of a foil lid and the re-closeability of a snap-on lid. The invention further refers to an arrangement of a cup lid with a cup and a method of producing the cup lid.

### Background

Within the dairy industry it is a common process to fill viscous products like yoghurt, sour cream and crème fraiche into cups or beakers, which immediately after filling are sealed with a foil lid, and a then a re-closable snap-on lid, typically of plastic, is attached. Hermetic seal is provided by the foil lid, and after the first consumption the remaining product can be stored with the applied snap-on lid as a protection.

However, in recent years there has been a demand for cups, beakers and lids with less plastic material. This has led to development of paper cups and beakers, and foil lids without any snap-on lids. This reduces the plastics material used, but it is also harder for a consumer to store any remaining product within the same cup, and storage time may be reduced due to exposure of the food product to outside air and contaminants.

Other sealable and re-closable cup lids available in the market are not fulfilling the success criteria for an efficient cup lid according to the invention in scope. An exemplary such other cup lid solution on the market consists of a relatively thick (200-400 micron) thermoformed foil lid which, due to its thickness, prevents rapid penetration of the sealing heat and thus give a longer sealing time and results in a lower production capacity in a cup filling machine which adds costs to the operation of such a solution.

Yet another sealable and re-closable cup lid on the market, shown in EP2202174B1, is provided with a thin (50-100 micron) sealing surface and has also a supplementing injection-moulded plastic layer in the surrounding area outside and inside of the seal area of the lid in order to give the lid sufficient stability. This lid type cannot be made as light and material efficient as the cup lid of the present disclosure.

A third variant of sealable cup lids on the market is shown in EP2194002B1, which shows a lid having a vertically upright standing plastic lid edge raising up from the lid foil along the periphery of the lid, connecting the lid foil to the lid edge. This design is not as efficient as the cup lid of the present disclosure in a cup filling- and sealing machine, because the upright standing lid edge requires great precision in positioning the sealing head versus the feeding of the cup and the positioning of the cup lid towards the sealing head, as else a too wide positioning variance may cause the hot sealing head to come into contact with the plastic lid edge, which might melt the lid edge. The sealing surface is also limited by the vertically upright lid edge which, when positioned onto a cup, takes up potential sealing surface, meaning that only a part of the cup rim sealing area can be used for sealing, increasing the risk for leaking cups and lids.

The present invention relates to a sealable and re-closable cup lid which replaces the two packaging components foil lid and snap-on lid, with one new cup lid combining the sealability of a foil lid and the re-closeability of a snap-on lid. The lid according to the present invention only needs a relatively short sealing time and thereby contributes to a higher production capacity, while at the same time minimizes usage of materials.

### SUMMARY

An object of the present invention is to solve, or at least mitigate, parts or all of the above drawbacks of prior-art lids. To this end, according to a first aspect, there is provided a sealable and re-closable cup lid, for a cup for food products, including a lid foil and a lid rim having an annular shape, wherein the lid foil is bonded together with the lid rim. The lid foil has an inner surface provided with a sealing area for attachment to the cup for food products. The lid rim is further provided with a lug arrangement around its inner perimeter, wherein the lug arrangement is configured to engage with a rim edge of the cup to cause the cup lid to seal around an opening of a cup. The lid foil constitutes an entire upper side of the cup lid and covers at least a part of an outside of the lid rim. Preferably, the lid foil covers at least a part of an outside of a side wall of the lid rim, i.e. a radially outwards-facing outside of the lid rim. The lug arrangement ensures that the cup lid can be used to seal tightly around the opening of the cup, in particular when re-closing the cup lid after having opened the cup lid for the first time.

The lid foil may define a top face plane of the cup lid. The cup lid may be configured to be opened in an opening direction along a lid axis defined as a normal to the top face plane, wherein the inner surface of the lid foil faces in a closing direction opposite to the opening direction. The lid axis defines a circular-cylindrical coordinate system, and thereby also axial, radial and tangential or circumferential directions, which directions may be referred to herein. In particular, in view of the cup lid's normal orientation during use, the opening and closing directions may be referred to as upwards and downwards, respectively. It will also be appreciated that even if a cup lid has a non-circular shape, for example a rectangular shape, it will still have a lid axis which defines radial and circumferential directions.

Preferably, a top surface of the lid foil extends in the top face plane at the position of the sealing area. Likewise preferably, the lid rim is in its entirety positioned on the side of the top face plane which faces in the closing direction, i.e. the lid rim does not extend beyond the lid foil in the opening direction. Thereby, the lid rim does not risk interfering with a sealing tool, such as a heat-sealing tool, which may be applied to the upper side of the cup lid for sealingly attaching the cup lid to a cup. In particular, the lid rim may extend only downwards from the level of the sealing area of the lid foil.

The sealing area of the lid foil may be configured to sealingly abut the cup along a sealing plane. Preferably, the lid rim is in its entirety positioned on the side of the sealing plane which faces in the closing direction, i.e. the lid rim does not extend beyond the sealing plane in the opening direction. The sealing plane may be separated from the top face plane by the thickness of the lid foil.

According to embodiments, also a top surface of a central portion of the lid foil, which central portion is enclosed by the sealing area, follows the top face plane. Thereby, the entire top face of the cup lid may extend along a single plane, which plane defines the uppermost part of the lid when the lid is attached to a cup positioned on a horizontal surface. The lid rim may define a circle enclosing the lid axis, wherein the circle may extend parallel to the top face plane.

According to embodiments, the sealing area may be heat-sealable to the cup. Such a sealing method is particularly fast and efficient, and enables obtaining a hermetic seal with the cup with high reliability and reproducibility. For example, the sealing area may comprise a layer of thermoplastic.

The lug arrangement may comprise a plurality of lugs. Such a plurality of lugs may be distributed along the inner perimeter of the lid rim. Alternatively, the lug arrangement may comprise a single, continuous lug. Such a single, continuous lug may extend along the entire inner perimeter of the lid rim, or along substantially the entire inner perimeter of the lid rim.

The lid foil may have been bonded together with the lid rim using an injection moulding process. In some embodiments, the lid foil and the lid rim may have been bonded together by adhesion of plastic melt to an inner side of the lid foil during the injection moulding process.

In some embodiments, the lid foil may be a foil laminate and/or extruded, wherein the lid foil may be a combination of paper and plastics and/or a laminated PET (polyethylene terephthalate) foil or a PP (polypropylene) foil. For example, the lid foil may be a laminate of paper and at least one of a PET foil and a PP foil. Preferably, the lid foil is free from any layer of metallic foil. Such a foil facilitates recycling. Preferably, the lid foil, and more preferably the entire cup lid, is combustible in its entirety, i.e. consists solely of paper and combustible plastic. The lid foil may also be an extruded plastic-only foil, for example of PET or PP.

In some embodiments, at least a part of the inner surface of the lid foil, and more preferably the entire inner surface of the lid foil, may be provided with a heat-sealable layer.

In some embodiments, the lid rim may have a tapered shape. In particular, the lid rim may taper in the closing direction. By way of example, a radially outer face of the lid rim may be frustoconical.

According to embodiments, the lid foil may have a constant, i.e. uniform, thickness inside, in particular radially inside, of the perimeter of the lid rim.

In some embodiments, the lid foil may have a thickness of 50-150 µm.

According to embodiments, an opening tab may extend from the cup lid. This facilitates opening the cup lid, in particular for the first time, when the cup lid is attached, e.g. heat-sealed, to the cup, and thereby requires more force to open. The opening tab may extend from the lid rim, for example from the lowermost portion of the lid rim. In particular, the opening tab may extend from the lid rim in a direction radially away from the lid axis. The opening tab may be flat, and may optionally extend parallel to the top face plane. According to embodiments, the opening tab may be integrally formed with the lid rim; for example, it may be injection moulded together with the lid rim. According to further embodiments, the opening tab may be provided with a structured gripping surface.

According to a second aspect, there is provided an arrangement including the cup lid as defined hereinabove and a cup for food products comprising a cup rim having a cup rim sealing area, wherein the sealing area of the cup lid has the same or larger area than the cup rim sealing area. The available sealing area of the cup lid being larger or at least the same as the available sealing area of the cup rim enables using the entire available sealing area of the cup rim for bonding to the cup lid. This facilitates obtaining a tight seal, even in the event of a slight misalignment of the cup lid on the cup.

According to a third aspect, the sealable and re-closable lid according to any of the embodiments hereinabove may be used with a cup for food products.

According to a fourth aspect, there is provided a combination of a cup for food products, in particular containing a food product, and a cup lid according to any of the embodiments defined hereinabove.

According to embodiments of the combination according to the fourth aspect, the lid foil may be bonded to a cup rim sealing area of the cup along a sealing line, and the lug arrangement may engage with a rim edge of the cup. The closed-loop sealing line defines a tight and hygienic seal prior to opening the cup lid for the first time, whereas the lug arrangement enables a reasonably tight and reliable seal even after the cup lid has been opened for the first time.

According to embodiments, the lid rim may extend only downwards from the level of the sealing area of the cup. The lid rim may typically be positioned radially outside of the cup.

According to a fifth aspect, there is provided a method for producing a sealable and re-closable cup lid according to any of the embodiments defined hereinabove, which method is an injection moulding process in which: plastic granules are fed into an injection moulding machine and heated to melt them into a fluid state as a plastic melt; a lid foil is placed into a mould, which mould includes two mould parts creating an annular space into which the plastic melt can flow, and wherein the two mould parts are clamping the lid foil in the correct position, i.e. in the position which is to become its final position in relation to the lid rim which is to be formed in the annular space. In particular, the lid foil may be positioned such that a free edge of the lid foil extends into the annular space. The lid foil may be larger than the radial width of the annular space, such that the free edge of the lid foil is shaped against the mould wall when clamping the lid foil. The plastic melt is injected into the mould so that the plastic melt flows into the annular space to form a lid rim and whereby the lid rim bonds to a peripheral part of an underside of the lid foil. The plastic melt is blocked by the mould from entering to a central part of the underside and a top side, opposite to the underside, of the lid foil. The central part of the underside of the lid foil is to become the inner surface of the lid foil in the final cup lid. The mould is then cooled and opened and the cup lid is thereafter ejected. In some embodiments of the method, the plastic melt is fed via a gate positioned towards an inside of the annular space defining the lid rim, in particular a radially inwards-facing inside of the annular space, so that the lid foil is pressed towards an outer part of the mould by the plastic melt.

### BRIEF DESCRIPTION OF DRAWINGS

Various features, aspects, and advantages of the present invention will become better understood when the following detailed description is read with reference to the accompanying figures in which like characters represent like parts throughout the figures, wherein:
Fig.1A shows a perspective top view of a first embodiment of a sealable and re-closable cup lid.
Fig. 1B shows a perspective bottom view of the embodiment in Fig.1A.
Fig. 1C shows a side view of the embodiment in Fig. 1A.
Fig. 1D shows a cross-sectional view of the embodiment in Fig.1A.
Fig.2A shows a perspective view of a lid rim of the cup lid of Figs 1A-1D.
Fig. 2B shows a bottom view of the lid rim of Fig. 2A.
Fig. 2C shows a top view of the lid rim of Fig. 2A.
Fig. 3A shows a cross-sectional side view of the cup lid of Figs 1A-1D, illustrating a first embodiment of lugs.
Fig. 3B shows a cross-sectional side view of a cup lid according to a second embodiment, the cup lid of the second embodiment having a second embodiment of lugs.
Fig. 3C shows a cross-sectional side view of a cup lid according to a third embodiment, the third embodiment having a third embodiment of lugs.
Fig. 4A shows a side view of a stack of cup lids according to any of the embodiments of Figs 1A-3C.
Fig. 4B shows a perspective view of the stack of lids of Fig. 4A.
Fig. 5A shows a side view of a combination of a cup lid according to the first embodiment of Figs 1A-1D and a cup.
Fig. 5B shows a bottom/perspective view of the combination of Fig. 5A.
Fig. 5C shows an enlargement of a part of Fig. 5B.
Fig. 6 shows a cross-sectional view in perspective of the a cup lid and cup of Figs 5A-5C.
Fig. 7 shows a cross-sectional view in perspective of the cup lid and cup of Fig. 6.
Fig. 8A shows a cross-sectional view of an illustration of an injection moulding machine adding plastic melt to a mould to create the cup lid of Figs 1A-1D.
Fig. 8B shows a cross-sectional view of an enlarged part of the injection moulding machine in Fig.8A.
Fig. 9 shows an illustration of a sealing machine applying the cup lid of any of Figs 1A-3C to a cup.
Fig. 10 is a perspective view of a cup lid according to a fourth embodiment.

### DETAILED DESCRIPTION

One or more specific embodiments of the present invention will be described below. These described embodiments are only exemplary of the present invention.

The embodiments herein are generally directed to a sealable and re-closable cup lid, which cup lid can be used with any conventional cup or cup for liquid foods, viscous food products or semi-liquid foods. The sealable and re-closable cup lid of the embodiments herein comprises a lid foil for sealing and an integrated lid rim for re-closing the cup lid.

For the purpose of this disclosure, the term "cup" is to be construed so as to cover containers generally shaped and sized as cups; accordingly, e.g. beakers and jars are examples of cups.

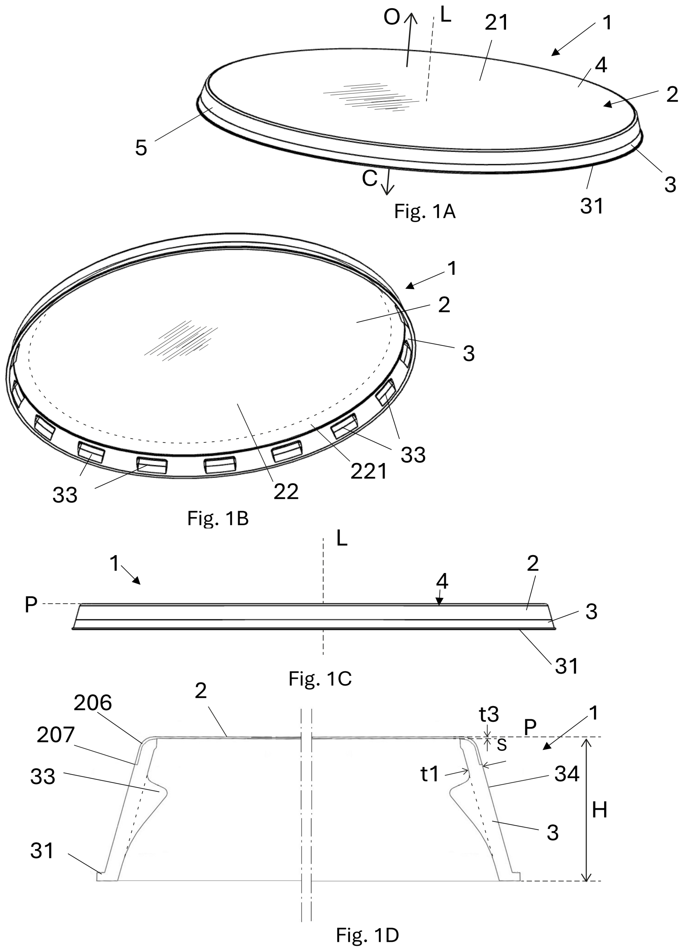

Fig. 1A shows a perspective side view of a sealable and re-closable cup lid 1. The cup lid 1 comprises a lid foil 2 and a lid rim 3, where the lid foil 2 has been attached to the lid rim 3, as explained further below.

The cup lid 1 has a flat surface defined by an upper side, i.e. top surface, 21 of the lid foil 2, which upper side 21 also defines a top face plane P (Fig. 1C) of the cup lid 1. The cup lid is configured to be opened upwards in an opening direction O along a lid axis L, which is a normal to the top face plane P, and to be closed in a closing direction C opposite to the opening direction. The lid foil 2 extends over the complete top surface of the cup lid 1 as well as a portion of the radially outer side 5 of the lid rim 3, stretching in a direction down from the lid surface 4 and the top face plane P towards an edge 31 of the lid rim 3. The lid rim 3 has an annular shape, and more precisely, a circular shape.

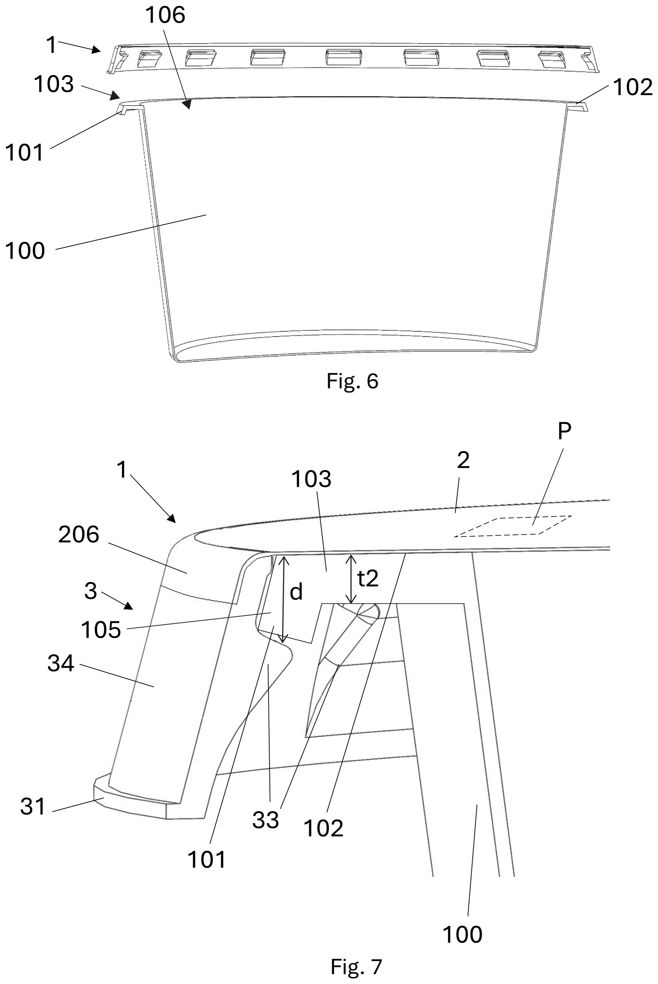

Fig. 1B shows an isometric view of the cup lid 1 from below, where an inner surface area 22 of the lid foil 2 can be seen and further that the lid rim 3 is provided with a lug arrangement comprising a plurality of lugs 33 around its inner perimeter, which lugs are provided to securely hold the cup lid 1 in place when attached to a cup 100 (Fig. 6). The lugs 33 hold the lid foil tightly against a sealing area 102 (Fig. 6) of the cup, and thereby also ensure that the cup lid can be used to seal tightly around an opening of a cup, and also ensure that the cup lid 1 can be opened and re-closed over and over again by a user. The lugs 33 are formed during the injection moulding process of the rim and are thus integral with the rim. The lid foil 2 is a thin, flexible sheet of material, which could also be referred to as a film, that covers the main opening of the cup on which the cup lid 1 has been placed, and constitutes an entire upper side 21 of the lid 1. The lid foil 2 provides a seal to protect the contents of the cup once filled. The lid foil 2 covers at least a part of an outside of the lid rim 3. The underside 22 of the lid foil 2 is the side closest to the cup, and hence the food product once the cup is filled, and top side 21 of the lid foil defines the upper side of the lid 1.

The lid foil 2 preferably has a constant cross section and thickness inside of the perimeter of the lid rim 3.

The lid foil 2 preferably has a thickness t3 (Fig. 1D) of 50-150 micron, which gives a quick heat penetration when heat-sealing the lid against the cup, and by that also a high production out-put in a cup filling machine. The lid foil 2 is preferably made of a relatively steady sealable foil material such as a foil laminate or extruded foil, which lid foil 2 is a combination of paper and plastics, a paper laminate or a laminated PET (polyethylene terephthalate) foil or PP (polypropylene) foil, so that no additional supplementing and supporting injection moulded plastic layer is required on the lid surface itself, except for the peripheral lid rim 3.

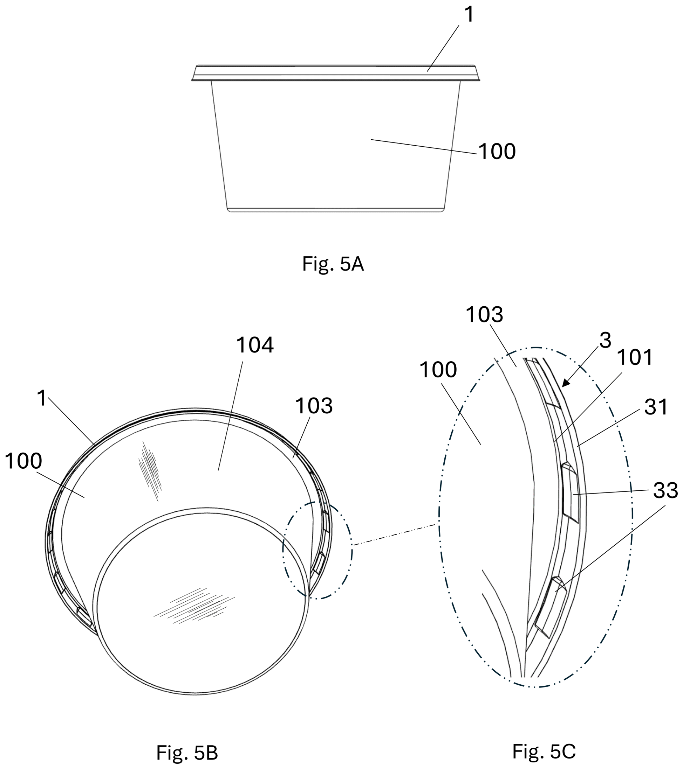

At least a part of the inner surface area 22 of the lid foil 2 is provided with a heat-sealable layer creating a sealing area 221 for sealing the cup lid 1 to a cup. The size of the sealing area of the cup lid 1 can be adapted to the cup it is intended to be used with but covers at least the cup rim sealing area 102 (Fig. 6). The sealing area of the cup lid 1 has the same or larger available sealing area than a cup rim sealing area 102 intended to be sealed by the cup lid 1. While illustrated as a ring-shaped area in the exemplary illustration of Fig. 1B, the heat-sealable layer preferably covers the entire inner surface area 22, which results in a cup lid 1 with a maximized inner surface area 22 provided with a heat-sealing layer. In such an alternative, the sealing area 221 for the cup lid 1 is the entire inner surface 22, i.e. the area covered by the heat-sealable layer. This contributes to a high security against seal leaks, as the inner surface area 22 of the cup lid foil 2 will cover the complete surface of the sealing area 102 of the cup 100 (Fig. 6), when mounted. The maximized heat-sealing of the inner surface area 22 also makes it possible to utilize the entire sealing area 102 of the cup 100 to seal the cup 100 once filled. When the cup lid 1 is detached from a cup 100 (Fig. 5A) for the first time after filling and sealing, the heat-sealable layer may function as a peelable layer and detach from the cup rim sealing area 102. When the cup lid 1 is placed on a cup 100 for re-closing, the sealing area 221 of the cup lid will again cover at least the sealing area 101 of the cup rim 103 (Fig. 6).

The heat-sealable layer comprises a resin such as a sealing lacquer or LDPE or PP polymer or combinations thereof, which may be configured as a laminate layer of the lid foil 2.

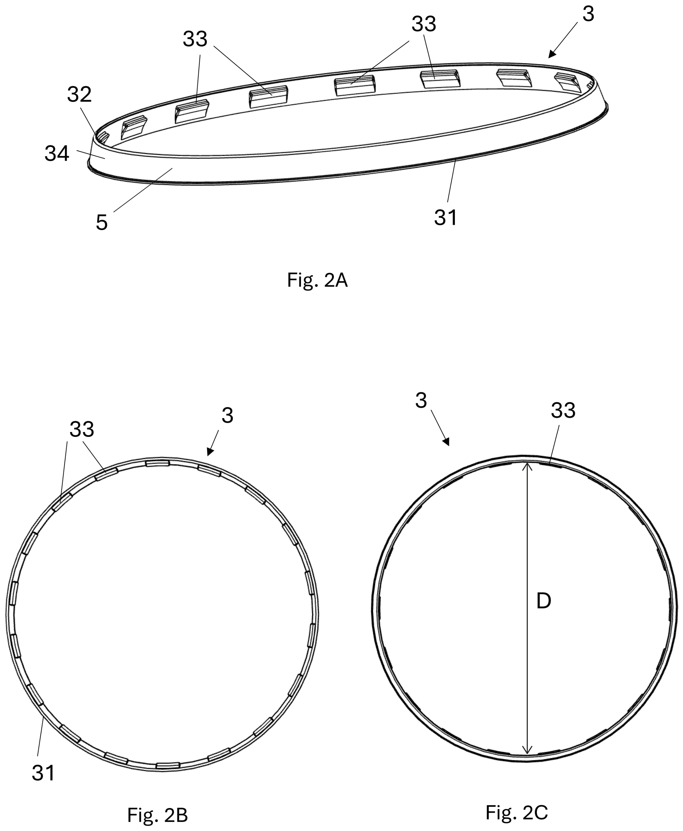

Fig. 1C shows a side view of a sealable and re-closable cup lid 1. From this view it can be seen that the radially outer face of the lid rim 3 has a tapered shape, as discussed further below with reference to Figs. 2A-C; in particular, the radially outer face has the shape of a frustum of a cone which tapers upwards.

Fig. 1D shows an enlarged cross-sectional broken view of a part of a cup lid 1, wherein it can be seen that the lid foil 2 extends over the edge of the upper, radially outer part of the lid rim 3 and further covers at least a part, in particular an upper portion, of the radially outer face of the lid rim 3, as explained further below. The lid foil 2 is hence bonded, through the injection moulding process as described further below, to a radially outer, upper part of the rim 3 all around the perimeter of the annular lid rim 3, and the lid foil 2 covers the entire top of the cup lid 1. Preferably, the lid rim 3 has an axial height H of less than 10 mm, for example between 3 mm and 8 mm. Such dimensions minimize the amount of plastic needed for the lid, while still enabling a lid 1 which is mechanically stable and easy to handle.

The sealing area 221 (Fig. 1B) of the lid foil 2 is configured to sealingly abut, and prior to first opening of the lid 1 also bond with, the sealing area 102 (Fig. 6) of the cup 100 (Fig. 6) along a sealing plane S, which is separated from the top face plane P by the thickness t3 of the lid foil 2.

Fig. 2A shows a perspective view of the annular lid rim 3, which lid rim 3 has an upper part 32, a side wall 34 defining the frustoconical shape of the radially outer face of the lid rim, and an edge 31 in the base, i.e. lowermost portion, of the rim 3. The side wall preferably has a thickness t1 (Fig. 1D) of less than 0,9 mm, for example between 0,4 mm and 0,8 mm. Such dimensions minimize the amount of plastic needed for the lid, while still enabling a lid 1 which is mechanically stable and easy to handle. Moreover, it enables the lid 1 to be bent during opening, which facilitates peeling off the lid 1 from the cup 100 when opening it for the first time. The lid rim is further provided with lugs 33, which lugs preferably are snap-lugs. The lid rim 3 has a tapered shape, where the lower part closest to the edge 31 has a larger diameter/area than the upper part 32 of the lid rim 3. The edge 31 is hence placed in the bottom (wider) part of the tapered lid rim 3.

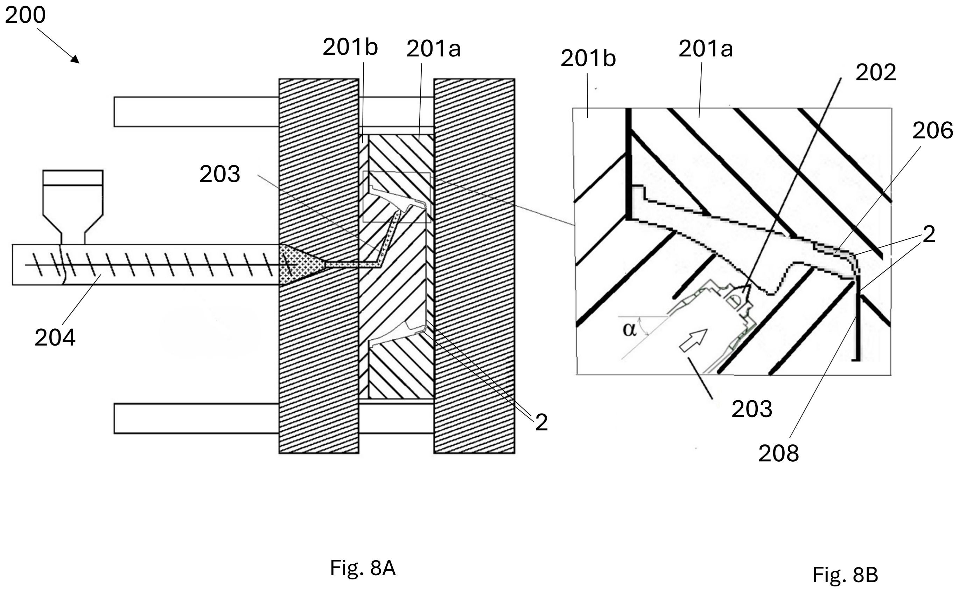

The diameter/enclosed area and shape of the upper part 32 of the lid rim 3 is adapted to fit the opening of the cup 100 (Fig. 6) onto which the lid is to be placed, providing a secure fit for the cup lid 1 to a cup 100. An exemplary suitable diameter D (Fig. 2C) of the lid rim 3 for typical cup sizes for dairy products may be between 75 mm and 150 mm, and more preferably between 85 mm and 120 mm. The lid upper part 32 and an upper part of the side wall 34 of the lid rim 3 bond with the underside of a peripheral part 206 of the lid foil 2 (Fig. 1D) during the injection moulding process. The peripheral part 206 extends downwards to a peripheral edge 207 of the lid foil 2 (Fig. 1D), which peripheral edge is at least partly received in the lid rim 3. In the embodiment illustrated in Fig. 1D, the peripheral edge 207 is positioned about 1 mm below the top face plane P, even though this is not necessary. Preferably, the peripheral edge 207 is positioned at least 500 µm, more preferably at least 1 mm, and even more preferably at least 1,5 mm below the top face plane P (Fig. 1D). This contributes to a strong mechanical engagement between the lid foil 2 and the lid rim 3, and also permits a certain positioning error of the lid foil in the mould cavity when manufacturing the lid in the manner described with reference to Figs 8A and 8B further below. Preferably, the peripheral edge 207 is positioned less than 4 mm, and more preferably less than 3 mm below the top face plane P (Fig. 1D). This minimizes the amount of creasing of the lid foil adjacent to the peripheral edge 207, which creasing might otherwise reduce the structural integrity of the lid rim 3. For example, tests have shown that a peripheral edge 207 positioned at least 2 mm below the top face plane P results in a particularly simple manufacturing process.

Fig. 2B shows a lid rim 3 from a bottom view and Fig. 2C shows the lid rim 3 from a top view.

The lid rim 3 according to the present invention has a height of approx. 3-20% of the lid diameter which stabilizes the lid for a simplified stacking, handling and processing in a cup filling- and sealing machine. The cup lid 1 has a flat upper surface extending along the top face plane P (Fig. 1C), without upstanding edges, for a wide tolerance of the sealing position versus the sealing head and the cup feeding position, so that a potential sealing head mis-positioning is acceptable without distorting the lid or the lid seal, as explained further below.

The cup lid 1 has a minimized usage of material and a low weight which provides environmental benefits with a lower climate footprint.

The annular side wall 32 of the lid rim 3 adds strength and rigidity to the cup lid 1, making it ideal for manual handling and running the cup lid 1 in high-speed production lines. It is desirable that stacks of cup lids 1 are stable to facilitate handling before application of cup lids 1 to cups 100 (Fig. 6). In a process for manufacturing or packaging, maintaining stable stacks of items is highly desirable before applying lids. The stability of the stacks is emphasized as highly desirable for both handling the items and separating them from the main stack when it is time to apply lids to the individual cups. For this reason the lid base has an external protruding edge 31 (Fig. 1D) so that stacked lids placed e.g. upside down in a magazine can be de-stacked one-by-one, by using the edge 31 for indexing the feed of cup lids and thus preventing the whole stack from falling through the bottom of the magazine.

The lid rim 3 is preferably made through an injection moulding process, in which a plastic melt is introduced towards the inside of the lid edge. The lid foil 2 is then pressed by the plastic melt towards the outer part of the mould, and by so positioned into its correct position on the outside of the cup lid 1, thus creating the top of the cup lid 1. This is explained further below with reference to the method of producing the cup lid 1.

The plastic used in the injection moulding process for the formation of a lid rim is preferably HDPE (polyethylene), PP (polypropylene) or PET (polyethylene terephthalate), but also other materials can be used, for example thermoformable materials.

The cup lid 1 consists of the lid foil 2 and the lid rim 3, joined by bonding the lid foil 2 to the plastic melt forming the annular side wall 34 of the lid rim 3. The lid foil 2 constitutes the entire upper side of the lid 1 and covers the outside of the annular side wall 34, from its upper side and down on the outside of the tapered annular sidewall. The lid foil 2 and the lid rim 3 are hence bonded together by adhesion of plastic melt to an inner side of the lid foil 2 during the injection moulding process, as described further below with reference to Figs. 8A and 8B.

Cups for viscous food generally have an upper outer edge encircling the opening of the cup. This upper outer edge serves as the surface to which the lid is applied. The lugs 33 on the lid rim 3 will, by the application of a small pressure (via an automated machine during fabrication or, later on, manually by a person using the cup) pass over the upper outer edge of the cup and snap into place underneath the upper outer edge of the cup. This snap-fit mechanism defined by the lugs 33 provides a means for re-closing the lid after first consumption, after which the hermetic seal of the heat-sealed lid has been broken. The upper outer edge of the cup will then be securely fit between the lid foil 2 and the lugs 33.

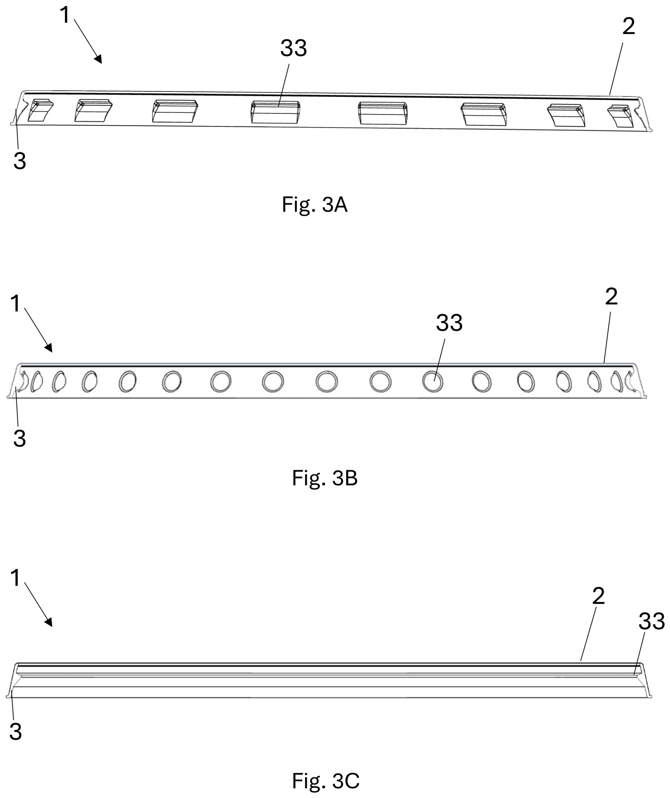

Fig. 3A-C shows three different embodiments of lug arrangements in a cup lid 1. Fig. 3A shows a first embodiment of a lug arrangement comprising snap-lugs 33 with an elongated shape, corresponding to the lugs 33 illustrated in Figs 1A-2C. Fig. 3B shows a second embodiment of a lug arrangement comprising lugs 33 having a circular shape. Fig. 3C shows a third embodiment of a lug arrangement comprising a single lug configured as an annular snap-ring 33 extending all around the inside of the annular side wall 34 of the rim 3.

The lugs are not limited to these shown embodiments, the person skilled in the art understands that the lugs can have any shape, and the number of lugs 33 used can be adapted to the design of the cup lid 1. In some embodiments, there could be only lugs in the corners of a rectangular or triangular shaped lid, while a circular lid might have lugs all around the perimeter of the annular lid rim. The lugs are arranged on the inside of the lid rim.

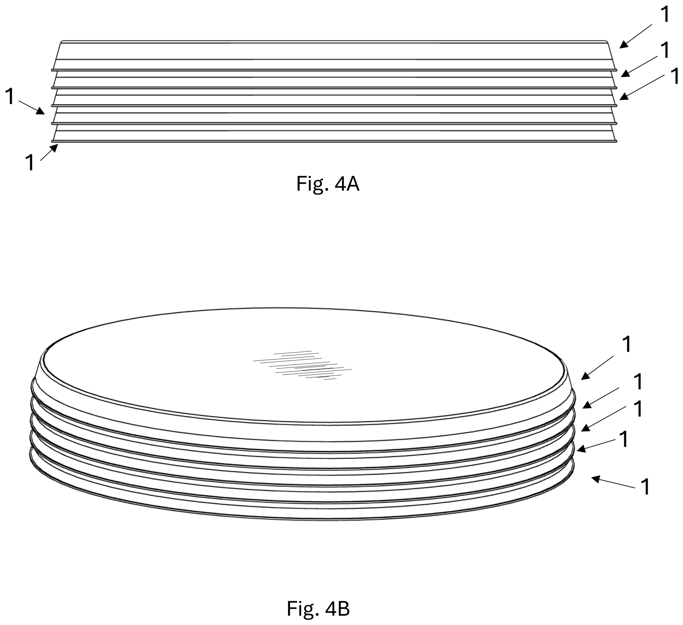

Figs. 4A shows a side view and 4B shows a perspective side view of five cup lids 1 stacked in a pile. The tapered shape of the lids contributes to the stackability of the lids together with the lugs and prevents the lids from interlocking with each other.

Fig. 5A shows a side view of an arrangement comprising a cup lid 1 attached to the opening of a cup 100. The illustrated cup lid 1 corresponds to the cup lid of the first embodiment illustrated in Figs 1A-3A; however, it will be appreciated that the arrangement also works with the cup lids of Figs 3B and 3C. In Fig. 5B and 5C it can be seen how the lugs 33 are positioned between the outer part of the cup 100 and the rim edge 31 when the cup lid 1 has been attached to the cup 100.

The cup lid 1 has at least the same, preferably a larger, available sealing area than that of the cup intended to be sealed by the cup lid 1 and the cup lid 1 can be removably attached to the cup 100.

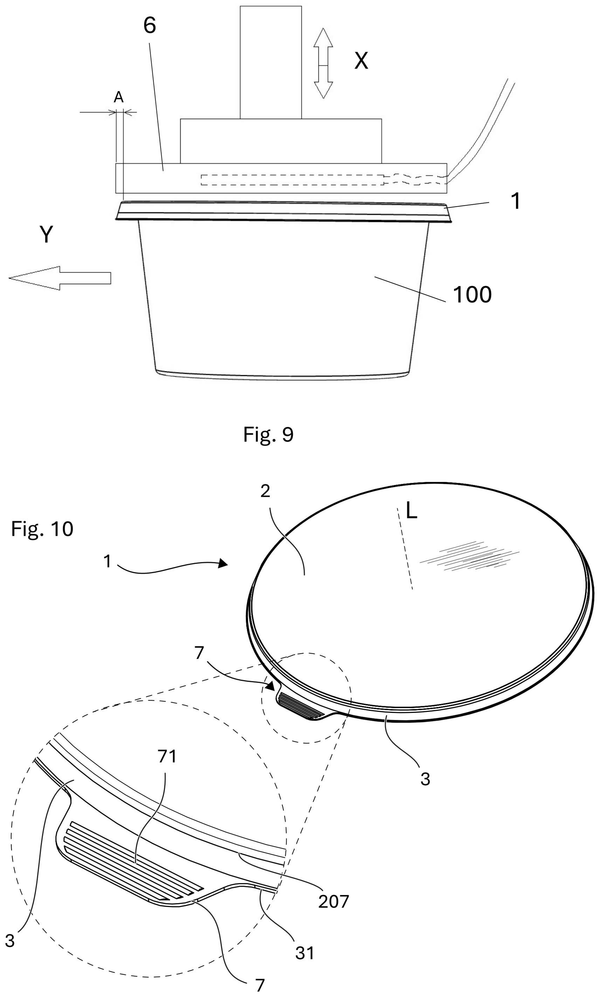

Figs 5B and 5C further show a rim 103 of the cup 100. The rim 103 extends radially outwards from the side wall 104 of the cup 100. When the cup 100 has been filled with food product, the cup lid 1 is positioned over the cup opening and the lugs 33 of the cup lid 1 are pressed downwards over a rim edge 101 of the rim 103 when the cup lid 1 is attached to the cup 100, so that the lugs 33 snap over the rim edge 101 of the cup 100 and keep the cup 100 closed. Then, the cup is sealed in a sealing machine (described further below with reference to Fig. 9) so that a bonded, but peelable, seal is created between the lid foil 2 and the sealing area 102 (Fig. 6) of the cup 100.

When filled cups then are used by the consumer, the seal of the cup lid 1 is broken and can be peeled, as the sealing layer of the lid foil 2 has the ability to detach and release from the cup 100 when the cup lid 1 is pulled upwards away from the rim edge 101 of the cup, a so-called peel seal. When opening the lid 1, the lugs 33 can snap over the rim edge 101 of the cup 100 and the cup lid 1 can be completely removed from the cup 100. When the consumer later needs to preserve the remaining content of an already opened cup 100, the cup lid 1 is repositioned onto the open cup 100 and the cup lid 1 is then pressed downwards again so that the lugs snaps over the cup edge 101, whereby the cup lid 1 is held in place by the snap-lugs 33 placed on the inside of the cup lid rim 2. The possibility for the lugs 33 to grip under the rim edge 101 of the cup creates a re-closeability functionality of the cup lid 1, and the engagement between the sealing area 221 of the lid foil 2 (Fig. 1B) and the rim edge 101 of the cup 100 keeps the cup lid 1 tight.

Fig. 6 shows a cross-sectional side view of a cup 100 and a cup lid 1 before the lid has been attached to the cup 100. When the cup lid 1 is to be attached to the cup 100, the cup lid 1 is placed over the opening of the cup 100 and pressed downwards so that the lugs 33 of the cup lid 1 snaps over the rim edge 101 of the container 100. This figure also shows the sealing area 102 of the cup 100, which sealing area 102 is defined by the top surface of the rim edge 101.

Fig. 7 shows a cross-sectional view of an enlarged portion of the cup lid 1 attached to the cup 100. From this figure it can be seen that the lid foil 2 covers the top of the cup 100 and continues downwards along a radial outside of the rim 3. The lugs 33 have snapped over the rim edge 101 of the cup 100 so that the cup lid 1 is held in place. The radially outer end of cup rim 103 comprises a downwards-projecting flange 105, which increases the rigidity of the cup rim 103. The flange 105 follows the inner contour of the cup lid 1 down to the rim edge 101 engaging with the lug arrangement 33, and thereby also increases the mechanical stability of the engagement between the lug arrangement 33 and the rim edge 101. For the purpose, the vertical, i.e. axial, distance d from the sealing area 221 (Fig. 1B) of the lid foil 2 to the lug arrangement 33 exceeds the material thickness t2 of the cup rim 103. An exemplary suitable distance d from the lid foil 2 to the lug arrangement 33 may be in the interval 0,8 mm - 2,2 mm, and somewhat more preferred in the interval 1,2 mm - 1,8 mm.

From this figure it can further be seen that the lid foil 2 covers the entire sealing area 102 of the cup 100. This gives the advantage that the entire sealing area 102 of the cup can be utilised for sealing of the cup lid 1 to the cup 100. The lid foil 2 also covers the entire opening 106 of the cup 100. The lid rim 3 is entirely positioned below the top face plane P of the cup lid. The lid rim 3 is also entirely positioned below the level of the sealing area 102 of the cup 100, which coincides with the level of the sealing area 221 of the lid foil when the cup lid 1 is attached to the cup 100.

Although both the cup lid 1 and the cup 100 have been shown having a circular cross section within this application, the invention is not limited to this specific shape. The cup lid 1 and the cup 100 must however have mating shapes so that the lid fits on the cup and a secure fit between the lid and the cup can be achieved. Other shapes that are commonly used for food products are for example rectangular cups, square cups, oval cups, and triangular shapes with different corner radiuses.

The new cup lid 1 according to the invention, which comprises a lid foil 2 for sealing and an integrated lid rim 3 for re-closing of the cup lid 1 to a cup 100, reduces packaging weights as compared with other lids currently on the market, benefitting the climate with reduced green-house gases from less packaging materials and also enables a more efficient operation of the cup filling machine by removing one lid component.

Fig. 8A and 8B shows an example of a schematic injection moulding machine filling a mould 201a, 201b with plastic melt. In the mould cavity, the lid foil is first positioned and then pressed by the plastic melt towards the outer half 201b of the mould and the annular side wall of the lid rim, as well as the lugs 33, are formed by the plastic melt against the inside of the foil lid all along its peripheral circumference. As shown enlarged in Fig. 8B, the gate 202, through which the plastic melt enters into the cavity mould, which in this mould is an annular space, is positioned towards the inside of the side wall of the mould 201 so that the lid foil 2 is pressed by the plastic melt towards the outer half 201b of the mould and thereby prevents plastic melt to enter on the outside of the lid foil 2.

One method of producing a re-closable lid 1 according to the present invention is an injection moulding process in which
plastic granules are fed into an injection moulding machine 200 and pass through an injection screw 204 wherein the plastic granules are heated to melt them into a fluid state as a plastic melt;
a lid foil 2 is placed into a mould 201, which mould comprises two parts 201a,201b creating an annular space into which the plastic melt can flow and wherein the two mould parts 201a,201b are clamping the lid foil 2 in the correct position;
the plastic melt are injected into the mould 201, through an injection unit 203 in the direction of the arrows in Fig. 8A, so that the plastic melt is flowing into the annular space to form a lid rim 3 and whereby the lid rim 3 bonds with the underside of a peripheral part 206 of the underside of the lid foil 2, and the plastic melt is blocked by the mould from entering to a central part 208 of the underside and top side of the lid foil 2;
the mould 201 is cooled and opened and the cup lid 1 is thereafter ejected.

The lid foil is clamped between the two mould parts 201a and 201b, and held in this position, so that when the plastic melt enters and fills the annular space of the mould to form the lid rim 3, the lid foil 2 is held in places and bonds with the plastic melt forming the lid rim 3.

Fig. 8B shows an enlarged illustration of a part of the injection moulding machine and in particular it shows an injection unit 203 positioned to inject plastic melt below the underside of the lid foil 2 at an angle α to the lid axis L (Fig. 1) so that the plastic melt that enters the mould cavity through the gate 202 presses the lid foil 2 towards an outer section of the mould cavity. Preferably, the angel (α) is between 0-90 degrees.

During injection moulding of the lid rim 3 to the lid foil 2, the plastic melt that will be constituting the side wall 32 and the edge 31 of the lid rim enters a mould cavity at an angle from a position below the underside of the lid foil 2 and inside of the lid rim perimeter. The plastic melt forms the lid side wall 32 and lid rim edge 31 and simultaneously creates a bond with the annular peripheral section of the inside of the sealable lid foil 2. During injection moulding the plastic melt presses the lid foil 2 towards the outer section of the mould cavity so that the lid foil 2 is formed and positioned to the final and correct form and position defined by the mould cavity and at the same time the lid foil 2 is bonded to the lid rim 2 of the cup lid 1.

Fig. 9 shows a schematic illustration of the sealing of a cup 100 with a cup lid 1. The sealing of cup lids 1 to filled cups 100 in a cup filling- and sealing machine is carried out by means of a vertically movable heated sealing head 6 which in a downward movement, shown with arrows X, applies the cup lid 1 onto the cup 100. When the sealing head 6 reaches the lower position towards the cup 100, the cup lid lug arrangement (not shown in this figure) is pushed outside and below the rim edge 101 (Fig. 6) of the cup 100. When the sealing head 6 finally reaches its lowest position and presses onto the cup lid 1 positioned on the vertically supported cup 100, heat is rapidly transferred through the lid foil 2 and bonds the heat sealable lid foil 2 with the rim 103 of the cup. The lid foil 2 is bonded to the cup rim sealing area 102 (Fig. 6) along a sealing line defining a closed loop about the lid axis L (Fig. 1). The radial with of the bonded sealing line may differ, but may, for example, take up substantially the entire radial width of the sealing area 221 illustrated in Fig. 1B. The sealed cup 100 then continues in the direction of the arrow Y while the next cup to be sealed is moved into position.

One benefit of having a flat upper side of the cup lid 1 during sealing is that the cup position can be allowed to vary slightly in the horizontal plane in relation to the sealing head, illustrated with arrows with a distance A in Fig. 9. Such deviation may occur when the drive chain of a linear cup filling machine has reached a certain wear over time that negatively affects the positioning. This wider tolerance window is achieved by the fact that no part of the lid rim 3 (Fig. 7) protrudes above the lid foil 2 (Fig. 7) adjacent to the sealing area 102 (Fig. 7) of the cup rim 103 (Fig. 6), such that the sealing head 6 will engage only with the top surface of the lid foil 2 even if slightly misaligned in the lateral direction. Preferably, the complete upper side of the cup lid 1 is heat resistant, has a flat surface, has an even thickness, and has a lid sealing area configured as a heat-sealable layer covering the complete sealing area 102 (Fig. 6) of the cup rim 103 (Fig. 6), and therefore transfers heat and pressure to the sealing area well, also in the case should the sealing head position deviate slightly in the horizontal plane, as the sealing head normally has a somewhat larger heated area than the cup lid and that heat and pressure therefor can be transferred despite a slightly incorrect positioning, without destroying the cup lid or impairing the seal quality.

Fig. 10 illustrates a cup lid 1 according to a fourth embodiment, along with a magnification of a portion of the cup lid 1 indicated by a broken-line circle. The cup lid 1 according to the fourth embodiment is identical to the cup lid according to the first embodiment with the exception that the cup lid of the fourth embodiment is provided with a flat opening tab 7 extending therefrom. The opening tab 7 is integrally formed with the lid rim 3, and extends from the edge 31 at the lowermost portion of the lid rim 3 in a direction radially away from the lid axis L, parallel the top face plane P (Fig. 1C). A top face of the opening tab 7 has a structured gripping surface 71 defined by a plurality of ridges; a similar structure is provided on the bottom face (not visible in Fig. 10) of the opening tab 7. The opening tab 7 is configured to be gripped by a pair of opposing fingers when opening the lid 1, and has a size adapted for such gripping. For example, the opening tab 7 preferably extends radially from the lid rim 3 by at least 5 mm, and more preferably by at least 8 mm.

The sealable and re-closable lid according to any of the embodiments described herein can be used with a cup for food products.

In addition to lowered carbon footprint and simplified operation of the cup filling machine, significant advantages are gained with the innovation such as the short sealing time for a higher output and a wide tolerance window for normal operating variations in cup filling- and sealing machines. The cup lid provides a short sealing time through a relatively thin lid foil that may have a constant cross-section over the complete lid foil surface except for the plastic lid rim. The sealable cup lids described herein provide a wide tolerance window for normal operating variations in a cup filling machines, namely that the positioning of the cup during sealing can be allowed to vary slightly in the horizontal plane in relation to the sealing head. Such deviation may occur as the drive chain of the cup filling machine may have a certain wear over time that negatively affects the positioning. This wide tolerance window is facilitated by the fact that the top of the cup lid is flat and that the pressure and heat of the sealing head thus have a good effect even if the positioning of the cup in the feeding direction should deviate slightly, as the sealing head normally has a little larger surface area than the cup lid and that heat and pressure can be transferred despite a slightly incorrect positioning.

In addition to the technical advantages, the invention also enables the entire top surface of the sealing film to be fully exposed. This not only enhances the overall aesthetic appeal by providing a clean and visually attractive presentation, but also maximizes the available space for printed decorative elements. Such an optimized decorative area is highly advantageous, especially for products displayed in retail settings, as it improves branding visibility and consumer engagement.

Even though the description is for a cup for food products, the lid described herein can be used for any type of cups.

## Claims

1. A sealable and re-closable cup lid (1), for a cup (100) for food products, comprising a lid foil (2) and a lid rim (3) having an annular shape, wherein the lid foil (2) is bonded together with the lid rim (3),
wherein the lid foil (2) has an inner surface (22) provided with a sealing area (221) for attachment to the cup (100) for food products;
wherein the lid rim (3) is provided with a lug arrangement (33) around its inner perimeter, wherein the lug arrangement (33) is configured to engage with a rim edge (101) of the cup (100) to cause the cup lid (1) to seal around an opening of the cup (100), and
wherein the lid foil (2) constitutes an entire upper side (21) of the cup lid (1) and covers at least a part of an outside of the lid rim (3).

2. A sealable and re-closable cup lid (1) according to claim 1, wherein the lid foil (2) has a constant cross section and thickness inside of the perimeter of the lid rim.

3. A sealable and re-closable cup lid (1) according to claim 1 or 2, wherein the lid foil (2) and the lid rim (3) are bonded together by adhesion of plastic melt to an inner side of the lid foil (2).

4. A sealable and re-closable cup lid (1) according to claim 1, 2 or 3, wherein the lid foil (2) is a foil laminate or extruded foil, which lid foil (2) is a combination of paper and plastics, a paper laminate or a laminated PET foil or a PP foil.

5. A sealable and re-closable cup lid (1) according to any of the preceding claims, wherein at least a part of the inner surface (22), in particular the sealing area (221), is provided with a heat-sealable layer.

6. A sealable and re-closable cup lid (1) according to any of the preceding claims, wherein the lid rim (3) has a tapered shape.

7. A sealable and re-closable cup lid (1) according to any of the preceding claims, wherein the lid foil (2) has a thickness of 50-150 µm.

8. A sealable and re-closable cup lid (1) according to any of the preceding claims, wherein an opening tab (7) extends from the cup lid (1).

9. An arrangement comprising the cup lid (1) according to any of claims 1-8 and a cup (100) for food products comprising a cup rim having a cup rim sealing area (102), wherein the sealing area (221) of the cup lid (1) has the same or larger area than the cup rim sealing area (102).

10. Use of a sealable and re-closable cup lid (1) according to any of claims 1-8 with a cup (100) for food products.

11. A combination of a cup (100) for food products a cup lid (1) according to any of the claims 1-8.

12. The combination according to claim 11, wherein the lid foil (2) is bonded to a cup rim sealing area (102) of the cup (100) along a sealing line defining a closed loop, and the lug arrangement (33) engages with a rim edge (101) of the cup (1).

13. The combination according to any of the claims 11-12, wherein the lid rim (3) extends only downwards from the level of the sealing area (102) of the cup (100).

14. A method for producing a sealable and re-closable cup lid (1) according to any of claims 1-8, which method is an injection moulding process in which:
plastic granules are fed into an injection moulding machine (200) and heated to melt them into a fluid state as a plastic melt;
a lid foil (2) is placed into a mould (201), which mould comprises two mould parts (201a,201b) creating an annular space into which the plastic melt can flow and wherein the two mould parts (201a,201b) are clamping the lid foil (2);
the plastic melt is injected into the mould (201) so that the plastic melt flows into the annular space to form a lid rim (3) and whereby the lid rim (3) bonds with a peripheral part of an underside (22) of the lid foil (2), and the plastic melt is blocked by the mould (201) from entering to a central part of the underside and a top side, opposite to the underside, of the lid foil (2); and
the mould (201) is cooled and opened and the cup lid (1) is thereafter ejected.

15. A method according to claim 14, wherein the plastic melt is fed via a gate (202) positioned towards an inside of the annular space defining the lid rim (3) so that the lid foil (2) is pressed towards an outer part of the mould (201) by the plastic melt.
